# EUROPÄISCHE PATENTSCHRIFT

(11) **EP 1 907 235 B1**
(45) Veröffentlichungstag und Bekanntmachung des Hinweises auf die Patenterteilung: **29.04.2009**
(21) Anmeldenummer: 06762228.2
(22) Anmeldetag: 28.06.2006
(51) Int. Cl.: B60N 2/20, E05B 65/19

(54) **VERRIEGELUNGSVORRICHTUNG IN EINEM FAHRZEUG, INSBESONDERE FÜR EINEN FAHRZEUGSITZ**
LOCKING DEVICE IN A VEHICLE, IN PARTICULAR FOR A VEHICLE SEAT
DISPOSITIF DE VERROUILLAGE DANS UN VEHICULE, EN PARTICULIER DESTINE A UN SIEGE DE VEHICULE

(30) Priorität: 27.07.2005 DE 102005035036
(43) Veröffentlichungstag der Anmeldung: 09.04.2008
(73) Patentinhaber: KEIPER GmbH & Co. KG, 67657 Kaiserslautern (DE)
(72) Erfinder: BÄUMCHEN, Carsten, 66649 Oberthal (DE); MÜLLER, Peter, 67686 Mackenbach (DE); CHRISTOFFEL, Thomas, 66909 Herschweiler-Pettersheim (DE)
(74) Vertreter: Patentanwälte Hosenthien-Held und Dr. Held
(86) Internationale Anmeldenummer: PCT/EP2006/006232
(87) Internationale Veröffentlichungsnummer: WO 2007/012372

(56) Entgegenhaltungen:
- EP-A1- 0 952 288
- EP-A2- 1 279 552
- WO-A-02/078998
- DE-A1- 4 439 644

## Beschreibung

Die Erfindung betrifft eine Verriegelungsvorrichtung in einem Fahrzeug, insbesondere für einen Fahrzeugsitz, mit den Merkmalen des Oberbegriffs des Anspruches 1.

Bei Verriegelungsvorrichtungen, die als Drehfallenschlösser bekannt sind, ist eine schwenkbare Klinke, die sogenannte Drehfalle, vorgesehen, welche formschlüssig direkt mit dem Gegenelement zusammenwirkt und durch einen Riegel gesichert wird, welcher ungefähr tangential zur Schwenkrichtung der Klinke auf diese einwirkt. In der DE 101 15 667 A1 ist eine Verriegelungsvorrichtung der eingangs genannten Art beschrieben, welche eine Klinke zum direkten Zusammenwirken mit dem Gegenelement aufweist, die im Normalfall durch den vorgespannten Spannexzenter und im Crashfall durch das abstützende Fangstück gesichert wird. Typische Einsatzzwecke sind die lösbar Befestigung des gesamten Fahrzeugsitzes am Fahrzeugboden oder die lösbar Verriegelung der Lehne des Fahrzeugsitzes mit der Karosserie oder mit anderen Teilen der Fahrzeugstruktur.

Der Erfindung liegt die Aufgabe zu Grunde, eine Verriegelungsvorrichtung der eingangs genannten Art zu vereinfachen. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, dass der Spannexzenter und das Fangstück direkt auf das Gegenelement einwirken, steht eine konstruktiv vereinfachte Verriegelungsvorrichtung zur Verfügung, die mit weniger Bestandteilen auskommt und somit kostengünstiger herzustellen ist, aber trotzdem spielfrei, crashsicher und einfach zu montieren ist. Die Herstellung kann in Metall oder - besonders kostengünstig - in Kunststoff erfolgen, wobei in letzterem Fall verschiedene Bestandteile einstückig miteinander ausgebildet werden können. Auch der Spannexzenter und das Fangstück können - unabhängig vom Material - einstückig miteinander ausgebildet sein, d.h. in Schwenkrichtung hintereinander, wie beispielsweise in der DE 44 39 644 A1 offenbart, so dass sie sie je nach Winkelstellung relativ zum Gegenelement zum Einsatz kommen.

Einsatzmöglichkeiten der erfindungsgemäßen Verriegelungsvorrichtung sind beispielsweise Drehlagerverriegelungen, Sitzkissenverriegelungen, Verriegelungen zwischen Lehne und Unterbau, beispielsweise in der Tischklappstellung, Verriegelungen zwischen Lehne und Fahrzeugstruktur, beispielsweise Durchladeverriegelungen, Verriegelungen zwischen Sitzkissen und Lehne und zwischen Fahrzeugsitz und Fahrzeugstruktur oder Verriegelungen von Hauben und Klappen, auch außerhalb eines Fahrzeugsitzes. Die Verriegelungsvorrichtung ist an einem von zwei Bauteilen des Fahrzeuges, insbesondere des Fahrzeugsitzes, und das Gegenelement am anderen Bauteil angebracht, wobei die beiden Bauteile im verriegelten Zustand durch das Zusammenwirken der Verriegelungsvorrichtung mit dem Gegenelement verbunden sind und im entriegelten Zustand relativ zueinander beweglich und/oder voneinander entfernbar sind.

Die Grundplatte kann eine Aufnahme zum formschlüssigen Zusammenwirken mit dem Gegenelement aufweisen. Mit einer geschickten Ausbildung der Aufnahme, vorzugsweise mit einer Verstärkung, und einer geeigneten Anordnung der Aufnahme kann ein Teil der Kräfte, insbesondere im Crashfall, über die Grundplatte abgeleitet werden. Die verbliebenen Kräfte werden im Normalfall vom Spannexzenter bis zu dessen Vorspannung aufgenommen, wofür der Spannexzenter vorzugsweise mittels einer exzentrisch zum ersten Lagerbolzen gekrümmten Spannfläche das Gegenelement im Normalfall direkt beaufschlagt. Darüber hinaus gehende Kräfte werden vom Fangstück aufgenommen, wofür dieses vorzugsweise mittels einer tangential oder konzentrisch zu seinem Lagerbolzen angeordneten oder verlaufenden Fangfläche das Gegenelement im Crashfall direkt abstützt.

Spannexzenter und Fangstück können auf dem gleichen Lagerbolzen oder auf verschiedenen Lagerbolzen gelagert sein und einfach oder doppelt vorhanden sein, um höhere Lasten aufnehmen zu können. Im Falle doppelt vorhandener Sicherungselemente sind diese vorzugsweise spiegelbildlich zueinander ausgebildet, angeordnet und funktionierend. Zum einfachen Entriegeln ist vorzugsweise ein Entriegelungspin vorgesehen, welcher am Fangstück angeordnet ist, um dieses zuerst zu schwenken und dann den Spannexzenter mitzunehmen. Der Entriegelungspin kann auch am Spannexzenter vorgesehen sein, um dann zeitverzögert das Fangstück mitzunehmen. Bei doppelt vorhandenen Sicherungselementen werden die Entriegelungspins gleichzeitig und gegensinnig bewegt. Der Entriegelungspin braucht keine exakte Bolzenform zu haben, sondern kann auch als Clips, Ring o.ä. ausgebildet sein. Im Prinzip wäre es denkbar, den Spannexzenter in Selbsthemmung mit dem Gegenelement zusammenwirken zu lassen, so dass zum Entriegeln der Spannexzenter zu bewegen wäre. Das Fangstück könnte dann entfallen, soweit es nicht zur Abstützung im Crashfall verwendet werden soll.

In einer bevorzugten Ausführungsform ist ein Sperrelement vorgesehen, welches im entriegelten Zustand der Verriegelungsvorrichtung wenigstens ein Sicherungselement mittelbar oder unmittelbar offen hält. Dadurch wird verhindert, dass die Verriegelungsvorrichtung bei entferntem Gegenelement in einen scheinbar verriegelten Zustand übergeht. Dies ist für eine Sicherheitsabfrage wichtig, welche anhand der Stellung eines Sicherungselementes vorgenommen und gegebenenfalls auch sichtbar gemacht werden kann. Vorzugsweise hält das Sperrelement im entriegelten Zustand genau ein Sicherungselement unmittelbar offen, während es die anderen Sicherungselemente mittelbar offen hält, beispielsweise aufgrund von Kopplungen zwischen den Sicherungselementen.

Vorzugsweise wirkt das Sperrelement formschlüssig mit dem offen zu haltenden Sicherungselement zusammen, insbesondere indem es einen Absatz zum Zusammenwirken mit einer Ecke oder dergleichen des Sicherungselementes aufweist. Es genügt aber, wenn das Sperrelement und das Sicherungselement innerhalb der Selbsthemmung aneinander anliegen, so dass die diversen Vorspannungen keine Bewegung des Sicherunsgelementes bewirken können. Das Zusammenwirken wird vorzugsweise direkt durch das Gegenelement beendet, indem das Sperrelement im entriegelten Zustand der Verriegelungsvorrichtung die Aufnahme quer zur Einführrichtung des Gegenelementes in die Aufnahme kreuzt, so dass das Gegenelement beim Einführen das Sperrelement beiseite drücken kann und dadurch vom Sicherungselement entfernt.

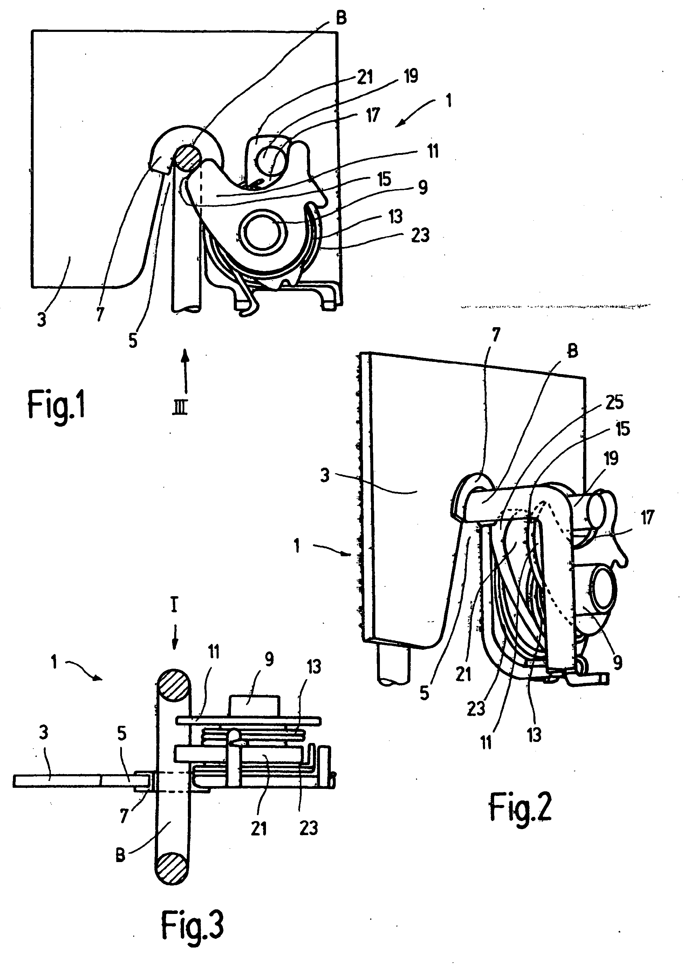

Im folgenden ist die Erfindung anhand von vier in der Zeichnung dargestellten Ausführungsbeispielen mit Abwandlungen näher erläutert. Es zeigen
- Fig. 1: eine Draufsicht auf das erste Ausführungsbeispiel in Richtung des Pfeiles I in Fig. 3,
- Fig. 2: eine perspektivische Ansicht des ersten Ausführungsbeispiels,
- Fig. 3: eine Seitenansicht des ersten Ausführungsbeispiels in Richtung des Pfeiles III in Fig. 1,

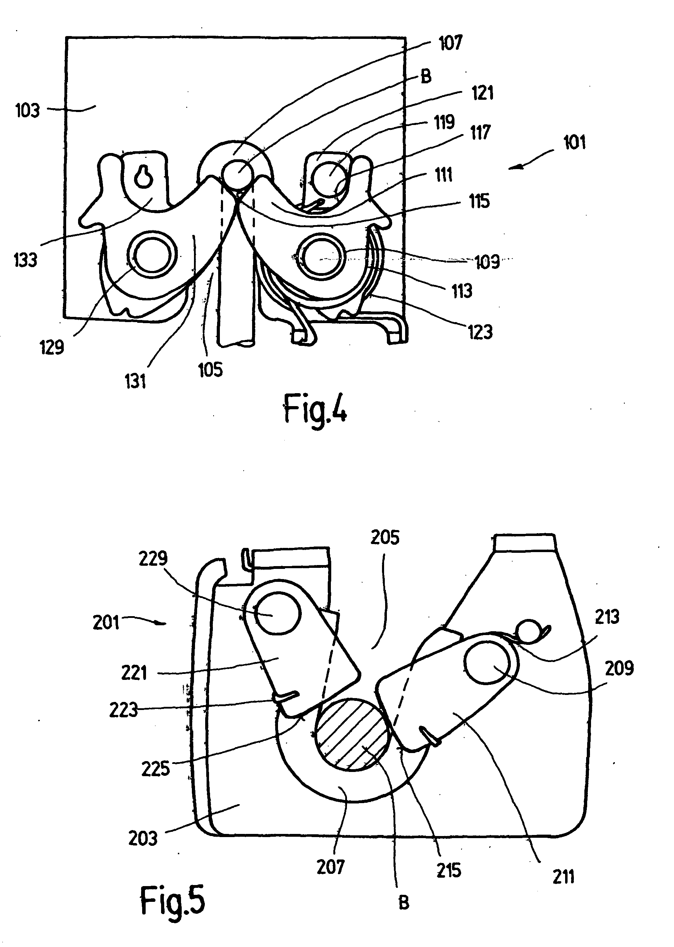

- Fig. 4: eine Draufsicht auf das zweite Ausführungsbeispiel,
- Fig. 5: eine Draufsicht auf das dritte Ausführungsbeispiel,

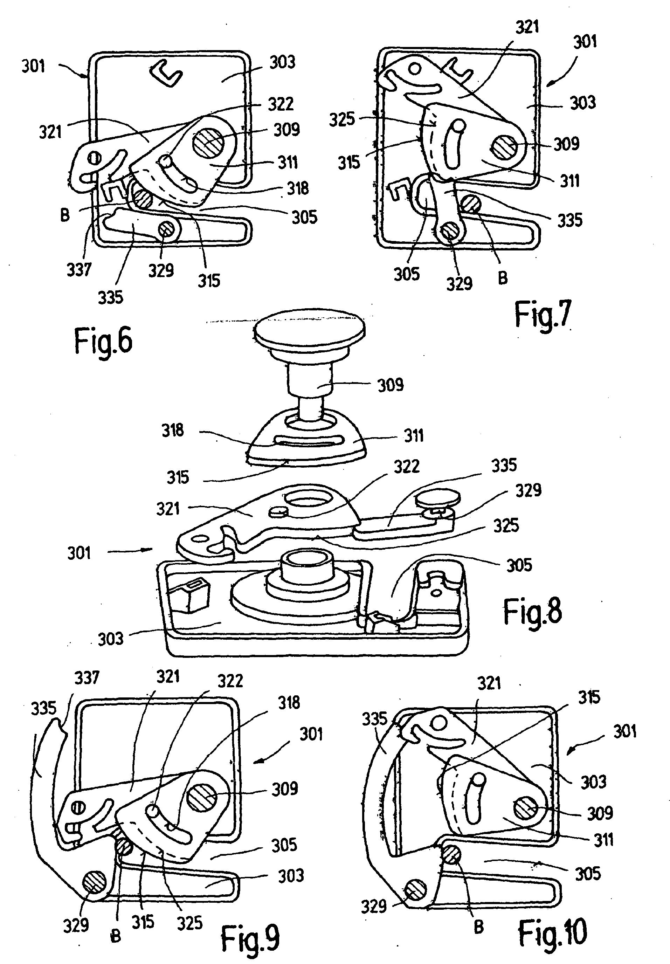

- Fig. 6: eine teilweise geschnitten dargestellte Ansicht des vierten Ausführungsbeispiels im verriegelten Zustand,
- Fig. 7: eine Fig. 6 entsprechende Ansicht im entriegelten Zustand,
- Fig. 8: eine Explosionsdarstellung des vierten Ausführungsbeispiels,
- Fig. 9: eine teilweise geschnitten dargestellte Ansicht einer Abwandlung des vierten Ausführungsbeispiels im verriegelten Zustand, und
- Fig. 10: eine Fig. 9 entsprechende Ansicht im entriegelten Zustand.

Ein Fahrzeugsitz für ein Kraftfahrzeug weist für eine Verbindung zweier Bauteile eine Verriegelungsvorrichtung auf, welche im ersten Ausführungsbeispiel das Bezugszeichen 1 trägt. Die Verriegelungsvorrichtung 1 ist an dem ersten Bauteil befestigt und wirkt mit einem Gegenelement B zusammen, welche am zweiten Bauteil befestigt ist. Eines der Bauteile kann auch der Fahrzeugstruktur des Kraftfahrzeuges zugeordnet sein. Das Gegenelement B kann beliebig profiliert, vorzugsweise zylindrisch, und beispielsweise ein Bolzen oder ein Bügel sein. Sofern die Verriegelungsvorrichtung 1 nicht mit dem Gegenelement B zusammenwirkt, d.h. der unverriegelte Zustand vorliegt, sind die beiden Bauteile relativ zueinander beweglich, beispielsweise schwenkbar, und/oder voneinander entfernbar. Im folgenden ist die Verriegelungsvorrichtung 1 zunächst im verriegelten Zustand beschrieben.

Die Verriegelungsvorrichtung 1 umfasst eine Grundplatte 3, welche Teil eines Gehäuses oder der Struktur sein kann. Die Grundplatte 3 weist eine Aufnahme 5 auf, welche sich in der Ebene der Grundplatte 3 öffnet und an ihrem mit einer Verstärkung 7 versehenen Grund formschlüssig mit dem Gegenelement B zusammenwirkt. An der Grundplatte 3 ist seitlich einer Flanke der Aufnahme 5 ein Lagerbolzen 9 angeordnet, der parallel zum Gegenelement B von der Grundplatte 3 absteht und vorliegend an dieser befestigt ist. Mittels des Lagerbolzens 9 ist ein Spannexzenter 11 an der Grundplatte 3 und relativ zu dieser schwenkbar gelagert, wobei sein zur Grundplatte 3 parallel angeordneter Schwenkbereich die Aufnahme 5 überstreicht. Der Spannexzenter 11 ist mittels einer an der Grundplatte 3 abgestützten und um den Lagerbolzen 9 gewickelten ersten Feder 13 gegen das in der Aufnahme 5 befindliche Gegenelement B vorgespannt. Dabei ist die am Gegenelement B anliegende Spannfläche 15 des Spannexzenters 11 exzentrisch zum Lagerbolzen 9 gekrümmt, so dass das Gegenelement B in die Aufnahme 5 gedrückt wird und damit im Normalfall gesichert ist. An die Spannfläche 15 schließt sich eine Gabel des Spannexzenters 11 an, innerhalb derer ein zum Lagerbolzen 9 paralleler Entriegelungspin 19 angeordnet ist.

Der Entriegelungspin 19 ist an einem Fangstück 21 angebracht, welches ebenfalls mittels des Lagerbolzen 9 relativ zur Grundplatte 3 schwenkbar gelagert ist. Entlang des Lagerbolzens 9 ist das Fangstück 21 zwischen dem Spannexzenter 11 und der Grundplatte 3 angeordnet und in einer dazu parallelen Ebene schwenkbar, wobei sein Schwenkbereich ebenfalls die Aufnahme 5 überstreicht. Das Fangstück 21 ist mittels einer an der Grundplatte 3 abgestützten und um den Lagerbolzen 9 gewickelten zweiten Feder 23 gleichsinnig zum Spannexzenter 11 vorgespannt und stützt im Crashfall das Gegenelement B ab, so dass dieses in der Aufnahme 5 verbleibt, auch wenn das Gegenelement B ein öffnendes Moment auf den Spannexzenter 11 ausübt. Die dann am Gegenelement B anliegende Fangfläche 25 des Fangstücks 21 ist tangential oder konzentrisch zum Lagerbolzen 9 angeordnet, so dass das Gegenelement B kein öffnendes Moment auf das Fangstück 21 ausüben kann.

Für den Übergang in den entriegelten Zustand der Verriegelungsvorrichtung 1 wird mittels des Entriegelungspins 19 das Fangstück 21 zurückgeschwenkt und mittels Anlage des Entriegelungspins 19 an der Gabel 17 der Sperrexzenter 11 mitgenommen. Das Gegenstück B kann nun die Aufnahme 5 verlassen. Die Verriegelungsvorrichtung ist im entriegelten Zustand. Die Federbelastung des Spannexzenters 11 und des Fangstücks 21 bringen diese beiden Sicherungselemente 11 und 21 in eine Position, in der sie die Aufnahme 5 kreuzen, wobei ein Anschlag zur Begrenzung vorgesehen sein kann. Wird das Gegenelement B wieder in die Aufnahme 5 eingeführt, drückt das Gegenelement B die besagten beiden Sicherungselemente 11 und 21 gegen deren Federbelastung etwas zurück, so dass diese wieder wirksam sein können, wenn das Gegenelement B in Anlage an die Verstärkung 7 kommt.

Die Verriegelungsvorrichtung 101 des zweiten Ausführungsbeispiels gleicht hinsichtlich Aufbau und Funktionalität derjenigen des ersten Ausführungsbeispiels, soweit nachfolgend nicht abweichend beschrieben, weshalb gleiche und gleichwirkende Bauteile um 100 höhere Bezugszeichen tragen. Die Grundplatte 103 mit der die Verstärkung 107 aufweisenden Aufnahme 105 stimmt mit derjenigen des ersten Ausführungsbeispiels überein. Ein erster Lagerbolzen 109 und ein hierauf schwenkbar gelagerter, durch eine erste Feder 113 vorgespannter erster Spannexzenter 111 und ein ebenfalls auf dem ersten Lagerbolzen 109 schwenkbar gelagerter, durch eine zweite Feder 123 vorgespanntes erstes Fangstück 121 stimmen mit den entsprechenden Bauteilen des ersten Ausführungsbeispiels überein, auch hinsichtlich der Ausbildung mit Spannfläche 115, Gabel 117, Entriegelungspin 119 und Fangfläche 125.

Die Einführrichtung des Gegenelementes B in die Aufnahme 105 und die Normale zur Grundplatte 103 definieren eine Ebene E. Ein zweiter Lagerbolzen 129, ein hierauf schwenkbar gelagerter zweiter Spannexzenter 131 und ein ebenfalls auf dem zweiten Lagerbolzen 129 schwenkbar gelagertes zweites Fangstück 133 sind spiegelbildlich - bezogen auf die Ebene E - zum ersten Lagerbolzen 109, ersten Spannexzenter 111 und ersten Fangstück 121 ausgebildet und angeordnet, die auch gegensinnig zu ihren Spiegelbildern schwenken. Das Gegenelement B wird dadurch beidseitig verriegelt gehalten. Zum Entriegeln werden über eine kniehebelähnliche Konstruktion die beiden Fangstück 121 und 133 gegensinnig aufgeschwenkt, worauf die Spannexzenter 111 und 131 entsprechend gegensinnig aufschwenken, um das Gegenelement B freizugeben.

In abgewandelter Ausführung hierzu können zwei Spannexzenter und ein Fangstück oder ein Spannexzenter und zwei Fangstücke vorgesehen sein.

Die Verriegelungsvorrichtung 201 des dritten Ausführungsbeispiels gleicht hinsichtlich Aufbau und Funktionalität wiederum derjenigen des ersten Ausführungsbeispiels, soweit nachfolgend nicht abweichend beschrieben, weshalb gleiche und gleichwirkende Bauteile um 200 höhere Bezugszeichen tragen. Die Grundplatte 203 mit der die Verstärkung 207 aufweisenden Aufnahme 205 entspricht derjenigen des ersten Ausführungsbeispiels. Ein erster Lagerbolzen 209 und ein hierauf schwenkbar gelagerter, durch eine erste Feder 213 vorgespannter Spannexzenter 211 und ein durch eine zweite Feder 223 vorgespanntes Fangstück 221 entsprechen den Bauteilen des ersten Ausführungsbeispiels, auch hinsichtlich der Ausbildung mit Spannfläche 215 und Fangfläche 225. Jedoch ist das Fangstück 221 auf einem zweiten Lagerbolzen 229, welcher ungefähr spiegelbildlich zum ersten Lagerbolzen 209 - bezüglich einer durch die Einführrichtung des Gegenelementes B und der Normalen zur Grundplatte 203 definierten Ebenen E - schwenkbar gelagert und gegensinnig zum Spannexzenter 211 vorgespannt ist.

Im vierten Ausführungsbeispiel weist ein Fahrzeugsitz für ein Kraftfahrzeug für eine Verbindung zweier Bauteile eine Verriegelungsvorrichtung 301 auf, welche hinsichtlich Aufbau und Funktionalität wiederum derjenigen des ersten Ausführungsbeispiels gleicht, soweit nachfolgend nicht abweichend beschrieben, weshalb gleiche und gleichwirkende Bauteile um 300 höhere Bezugszeichen tragen. Die Verriegelungsvorrichtung 301 ist an dem ersten Bauteil befestigt und wirkt mit einem Gegenelement B zusammen, welches am zweiten Bauteil befestigt ist. Eines der Bauteile kann auch der Fahrzeugstruktur des Kraftfahrzeuges zugeordnet sein. Das Gegenelement B kann beliebig profiliert, vorzugsweise zylindrisch, und beispielsweise ein Bolzen oder ein Bügel sein. Sofern die Verriegelungsvorrichtung 301 nicht mit dem Gegenelement B zusammenwirkt, d.h. der unverriegelte Zustand vorliegt, sind die beiden Bauteile relativ zueinander beweglich, beispielsweise schwenkbar, und/oder voneinander entfernbar. Im folgenden ist die Verriegelungsvorrichtung 301 zunächst im verriegelten Zustand beschrieben.

Die Verriegelungsvorrichtung 301 umfasst eine Grundplatte 303, welche Teil eines Gehäuses oder der Struktur sein kann. Die Grundplatte 303 weist eine Aufnahme 305 auf, welche sich in der Ebene der Grundplatte 303 in einer Einführrichtung öffnet und an ihrem - optional mit einer Verstärkung versehenen - Grund weinigstens teilweise formschlüssig mit dem Gegenelement B zusammenwirkt. An der Grundplatte 303 ist - vorzugsweise seitlich zu einer Flanke der Aufnahme 305 - ein erster Lagerbolzen 309 angeordnet, der parallel zum Gegenelement B von der Grundplatte 303 absteht und vorliegend an dieser befestigt ist. Soweit nachfolgend Richtungsangaben in Zylinderkoordinaten verwendet sind, wird dieses Zylinderkoordinatensystem durch den ersten Lagerbolzen 309 definiert.

Mittels des ersten Lagerbolzens 309 ist ein Spannexzenter 311 an der Grundplatte 303 und relativ zu dieser schwenkbar gelagert, wobei sein zur Grundplatte 303 parallel angeordneter Schwenkbereich die Aufnahme 305 überstreicht. Der Spannex zenter 311 ist mittels einer an der Grundplatte 303 abgestützten, vorliegend nicht dargestellten Feder gegen das in der Aufnahme 305 befindliche Gegenelement B vorgespannt. Dabei ist die am Gegenelement B anliegende Spannfläche 315 des Spannexzenters 311 exzentrisch zum ersten Lagerbolzen 309 gekrümmt, so dass das Gegenelement B in die Aufnahme 305 gedrückt wird und damit im Normalfall gesichert ist. Radial zwischen der Spannfläche 315 und dem ersten Lagerbolzen 309 weist der Spannexzenter 311 eine um den ersten Lagerbolzen 309 gekrümmten Schlitz 318 auf.

Ein Fangstück 321 ist ebenfalls mittels des ersten Lagerbolzen 309 relativ zur Grundplatte 303 schwenkbar gelagert, und zwar bezüglich des ersten Lagerbolzens 309 axial zwischen dem Spannexzenter 311 und der Grundplatte 303 in einer dazu parallelen Ebene, wobei sein Schwenkbereich ebenfalls die Aufnahme 305 überstreicht. Ein vom Fangstück 321 axial abstehender, zum ersten Lagerbolzen 309 abstehender Zapfen 322 greift in den Schlitz 318, wodurch eine Schlitz-Zapfen-Führung zur Koppelung und gegenseitigen Mitnahme von Spannexzenter 311 und Fangstück 321 entsteht. Das Fangstück 321 kann gleichsinnig zum Spannexzenter 311 vorgespannt sein. Das Fangstück 321 weist eine tangential oder konzentrisch zum ersten Lagerbolzen 309 angeordnete, d.h. vorliegend um diesen gekrümmte Fangfläche 325 auf. Im Crashfall gelangt die Fangfläche 325 in Anlage an das Gegenelement B, wobei das Gegenelement B - aufgrund der zum ersten Lagerbolzen 309 konzentrischen Fangfläche 325 - kein öffnendes Moment auf das Fangstück 321 ausüben kann. So stützt das Fangstück 321 mittels der Fangfläche 325 das Gegenelement B ab, so dass dieses in der Aufnahme 305 verbleibt, auch wenn das Gegenelement B ein öffnendes Moment auf den Spannexzenter 311 ausübt.

Parallel zum ersten Lagerbolzen 309 ist ein zweiter Lagerbolzen 329 angeordnet, mittels welchem ein Sperrelement 335 schwenkbar an der Grundplatte 303 gelagert ist. Das Sperrelement 335 ist - zumindest teilweise - in der gleichen Ebene wie das Fangstück 321 angeordnet und mittels einer nicht dargestellten Feder zur Aufnahme 305 hin vorgespannt. Der Schwenkbereich des Sperrelementes 335 überstreicht ebenfalls die Aufnahme 305. Im verriegelten Zustand der Verriegelungsvorrichtung 301 hält allerdings das Gegenelement B das Sperrelement 335 beiseitegedrückt, d.h. seitlich der Aufnahme 305.

Für den Übergang in den entriegelten Zustand der Verriegelungsvorrichtung 301 wird das Fangstück 321, beispielsweise mittels eines am Fangstück 321 angreifenden und dort befestigten Seilzuges, aufgeschwenkt. Der Spannexzenter 311 wird mittels der Schlitz-Zapfen-Führung mitgenommen. Das Gegenstück B kann nun die Aufnahme 305 verlassen. Die Verriegelungsvorrichtung 301 ist im entriegelten Zustand. Die Federbelastung des Sperrelementes 335 bringt dieses in eine Position, in welcher es wenigstens bereichsweise die Aufnahme 305, d.h. die Einführrichtung, kreuzt, d.h. eine bezüglich des zweiten Lagerbolzens 329 radiale Richtung des Sperrelementes 335 quer zur Einführrichtung des Gegenelementes B in die Aufnahme 305 verläuft, wobei ein Anschlag zur Begrenzung des Sperrelementes 335 vorgesehen sein kann.

Mittels eines geeigneten Absatzes 337 oder dergleichen, welcher in der Nähe der Anlagestelle an das Gegenelement B beim Verriegeln vorgesehen ist, wirkt das Sperrelement 335 vorzugsweise formschlüssig mit dem Fangstück 321 zusammen, nämlich an einer Ecke oder dergleichen der Fangfläche 325, und hält das Fangstück 321 unmittelbar offen. Mittels der Schlitz-Zapfen-Führung wird auch der Spannexezenter 311 mittelbar offen gehalten. Das Sperrelement 335 verhindert Somit, dass die Verriegelungsvorrichtung 301 ohne Gegenelement B verriegeln kann, d.h. die Bestandteile ein dem verriegelten Zustand entsprechende Stellung einnehmen können. Durch Anbringung einer Markierung auf einer Sichtfläche oder dergleichen, beispielsweise am Fangstück 321, kann dieser offen gehaltene Zustand nach außen sichtbar gemacht werden.

Wird das Gegenelement B in der Einführrichtung wieder in die Aufnahme 305 eingeführt, drückt das Gegenelement B das Sperrelement 335 zurück, wodurch dieses das Fangstück 321 freigibt. Die beiden Sicherungselemente, d.h. das Fangstück 321 und der Spannexzenter 311, können wieder zur Aufnahme 305 schwenken und wieder wirksam werden, wenn das Gegenelement B in Anlage an den Grund der Aufnahme 305 kommt.

Eine Abwandlung zum vierten Ausführungsbeispiel unterscheidet sich lediglich in der Form des Sperrelementes 335, dem Abstand zwischen dem Absatz 337 und der Anlagestelle an das Gegenelement B beim Verriegeln und wo der Absatz 337 mit dem Fangstück 321 zusammenwirkt. In der Abwandlung ist nämlich der Absatz 337 an einem länglichen Ausleger des Sperrelementes 335 vorgesehen, um mit einer von der Fangfläche 325 beabstandeten Stelle, vorliegend ebenfalls an einer Ecke, mit dem Fangstück 321 zusammenzuwirken.

Anstelle des Fangstücks 321 könnte das Sperrelement 335 im entriegelten Zustand auch den Spannexzenter 311 unmittelbar offen halten, welcher dann mittels der Schlitz-Zapfen-Führung das Fangstück 321 offen hält, d.h. das Sperrelement 335 hielte das Fangstück 321 mittelbar offen.

In Abwandlungen zu den ersten drei Ausführungsbeispielen und ihren Abwandlungen kann ebenfalls ein Sperrelement 335 vorgesehen sein, welches im entriegelten Zustand die vorhandenen Spannexzenter und/oder Fangstücke mittelbar oder unmittelbar offen hält.

### Bezugszeichenliste

- 1, 101, 201, 301: Verriegelungsvorrichtung
- 3, 103, 203, 303: Grundplatte
- 5, 105, 205, 305: Aufnahme
- 7, 107, 207: Verstärkung
- 9, 109, 209, 309: (erster) Lagerbolzen
- 11, 111, 211, 311: (erster) Spannexzenter
- 13, 113, 213: erste Feder
- 15, 115, 215, 315: Spannfläche
- 17, 117: Gabel
- 19, 119: Entriegelungspin
- 21, 121, 221, 321: (erstes) Fangstück
- 23, 123, 223: zweite Feder
- 25, 125, 225, 325: Fangfläche
- 129,229,329: zweiter Lagerbolzen
- 131: zweiter Spannexzenter
- 133: zweites Fangstück
- 318: Schlitz
- 322: Zapfen
- 335: Sperrelement
- 337: Absatz
- B: Gegenelement

## Patentansprüche

1. Verriegelungsvorrichtung (1; 101; 201; 301) in einem Fahrzeug, insbesondere für einen Fahrzeugsitz, zum Zusammenwirken mit einem Gegenelement (B), mit einer Grundplatte (3; 103; 203; 303), wenigstens einem Spannexzenter (11; 111, 131; 211; 311), welcher mittels eines ersten Lagerbolzens (9; 109; 209; 309) schwenkbar an der Grundplatte (3; 103; 203; 303) gelagert ist und im Normalfall aufgrund einer Vorspannung das Gegenelement (B) sichert, wenigstens einem Fangstück (21; 121, 133; 221; 321), welches ebenfalls schwenkbar an der Grundplatte (3; 103; 203; 303) gelagert ist und im Crashfall eine Abstützung des Gegenelementes (B) bewirkt, **dadurch gekennzeichnet, dass** im verriegelten Zustand der Verriegelungsvorrichtung (1; 101; 201; 301) der Spannexzenter (11; 111, 131; 211; 311) und das Fangstück (21; 121, 133; 221; 321) als Sicherungselemente direkt auf das Gegenelement (B) einwirken.

2. Verriegelungsvorrichtung nach Anspruch 1**, dadurch gekennzeichnet, dass** die Grundplatte (3; 103; 203; 303) eine Aufnahme (5; 105; 205; 305) aufweist, welche an ihrem Grund mit dem Gegenelement (B) im verriegelten Zustand der Verriegelungsvorrichtung (1; 101; 201; 301) formschlüssig zusammenwirkt, und insbesondere eine Verstärkung (7; 107; 207) dort aufweist.

3. Verriegelungsvorrichtung nach Anspruch 1 oder 2, **dadurch gekennzeichnet, dass** im verriegelten Zustand der Verriegelungsvorrichtung (1; 101; 201; 301) der Spannexzenter (11; 111, 131; 211; 311) mittels einer exzentrisch zum ersten Lagerbolzen (9; 109; 209; 309) gekrümmten Spannfläche (15; 115; 215; 315) das Gegenelement (B) im Normalfall direkt beaufschlagt.

4. Verriegelungsvorrichtung nach einem der vorhergehenden Ansprüche, **dadurch gekennzeichnet, dass** zum Entriegeln der Verriegelungsvorrichtung (1; 101; 201; 301) das Fangstück (21; 121, 133; 221; 321) einen Entriegelungspin (19; 119) oder ein anderes dort angebrachtes Element aufweist, mittels dessen das Fangstück (21; 121, 133; 221; 321) vom Gegenelement (B) wegschwenkbar ist und der den Spannexzenter (11; 111, 131; 211; 311) gegen seine Vorspannung mitnimmt.

5. Verriegelungsvorrichtung nach einem der vorhergehenden Ansprüche, **dadurch gekennzeichnet, dass** das Fangstück (21; 121, 133; 221; 321) mittels des ersten Lagerbolzens (9; 109; 309) oder eines zweiten Lagerbolzens (129; 229) schwenkbar an der Grundplatte (3; 103; 203; 303) gelagert ist.

6. Verriegelungsvorrichtung nach Anspruch 5, **dadurch gekennzeichnet, dass** im verriegelten Zustand der Verriegelungsvorrichtung (1; 101; 201; 301) das Fangstück (21; 121, 133; 221; 321) mittels einer tangential oder konzentrisch zum ersten oder zweiten Lagerbolzen (9; 109, 129; 229; 329) angeordnete Fangfläche (25; 125; 225; 325) das Gegenelement (B) im Crashfall direkt abstützt.

7. Verriegelungsvorrichtung nach einem der vorhergehenden Ansprüche, **dadurch gekennzeichnet, dass** ein zweiter Spannexzenter (131) und/oder ein zweites Fangstück (133) vorgesehen sind, welche entsprechend zum ersten Spannexzenter (11; 111; 211; 311) und zum ersten Fangstück (21; 121; 221; 321) auf das Gegenelement (B) einwirken.

8. Verriegelungsvorrichtung nach Anspruch 7, **dadurch gekennzeichnet, dass** der erste Spannexzenter (11; 111; 211; 311) und das erste Fangstück (21; 121; 221; 321) einerseits und der zweite Spannexzenter (131) und das zweite Fangstück (133) andererseits spiegelbildlich zueinander bezüglich einer Ebene (E) ausgebildet und angeordnet sind, welche durch die Einführrichtung des Gegenelementes (B) in die Aufnahme (5; 105; 205; 305) und die Normale zur Grundplatte (3; 103; 203; 303) definiert ist.

9. Verriegelungsvorrichtung nach einem der vorhergehenden Ansprüche, **dadurch gekennzeichnet, dass** die auf verschiedenen Lagerbolzen (9; 109, 129; 229; 329) angeordneten Sicherungselemente (11; 111, 131; 211; 311; 21; 121, 133; 221; 321) gegensinnig zueinander vorgespannt sind und/oder schwenken.

10. Verriegelungsvorrichtung nach einem der vorhergehenden Ansprüche, **dadurch gekennzeichnet, dass** die auf dem gleichen Lagerbolzen (9; 109, 129; 229; 329) angeordneten Sicherungselemente (11; 111, 131; 211; 311; 21; 121, 133; 221; 321) gleichsinnig vorgespannt sind und/oder schwenken und/oder mittels einer Kopplung, insbesondere einer Schlitz-Zapfen-Führung (318, 322), auf Mitnahme gekoppelt sind.

11. Verriegelungsvorrichtung nach einem der vorhergehenden Ansprüche, **dadurch gekennzeichnet, dass** die vorgesehenen Sicherungselemente (11; 111,131; 211; 311; 21; 121, 133; 221; 321) durch erste und zweite Federn (13, 23; 113, 123; 213, 223) beaufschlagt werden, welche an der Grundplatte (3; 103; 203; 303) abgestützt und insbesondere um die zugeordneten ersten und zweiten Lagerbolzen (9; 109, 129; 229; 329) gewickelt sind.

12. Verriegelungsvorrichtung nach einem der vorhergehenden Ansprüche, **dadurch gekennzeichnet, dass** ein Sperrelement (335) vorgesehen ist, welches im entriegelten Zustand der Verriegelungsvorrichtung (1; 101; 201; 301) wenigstens ein Sicherungselement (11; 111, 131; 211; 311; 21; 121, 133; 221; 321) mittelbar oder unmittelbar offen hält.

13. Verriegelungsvorrichtung nach Anspruch 12, **dadurch gekennzeichnet, dass** das Sperrelement (335) genau ein Sicherungselement (11; 111, 131; 211; 311; 21; 121, 133; 221; 321) unmittelbar und die anderen Sicherungselemente (11; 111, 131; 211; 311; 21; 121, 133; 221; 321) mittelbar offen hält.

14. Verriegelungsvorrichtung nach Anspruch 12 oder 13, **dadurch gekennzeichnet, dass** das Sperrelement (335) formschlüssig mit dem offen zu haltenden Sicherungselement (11; 111, 131; 211; 311; 21; 121, 133; 221; 321) zusammenwirkt, insbesondere einen Absatz (337) zum Zusammenwirken mit einer Ecke des Sicherungselementes (11; 111, 131; 211; 311; 21; 121, 133; 221; 321) aufweist.

15. Verriegelungsvorrichtung nach einem der Ansprüche 12 bis 14, **dadurch gekennzeichnet, dass** im entriegelten Zustand der Verriegelungsvorrichtung (1; 101; 201; 301) das Sperrelement (335) die Aufnahme (5; 105; 205; 305) quer zur Einführrichtung des Gegenelementes (B) in die Aufnahme (5; 105; 205; 305) kreuzt.

16. Verriegelungsvorrichtung nach einem der vorhergehenden Ansprüche, **dadurch gekennzeichnet, dass** die Verriegelungsvorrichtung (1; 101; 201; 301) an einem von zwei Bauteilen der Fahrzeuges, insbesondere des Fahrzeugsitzes, und das Gegenelement (B) am anderen Bauteil angebracht ist, wobei die beiden Bauteile im verriegelten Zustand durch das Zusammenwirken der Verriegelungsvorrichtung (1; 101; 201; 301) mit dem Gegenelement (B) verbunden sind und im entriegelten Zustand relativ zueinander beweglich und/oder entfernbar sind.

## Claims

1. A locking device (1; 101; 201; 301) in a vehicle, in particular for a vehicle seat, for cooperating with a counter element (B), with a base plate (3; 103; 203; 303), at least one clamping eccentric (11; 111, 131; 211; 311) that is pivotably mounted on the base plate (3; 103; 203; 303) by means of a first bearing pin (9; 109; 209; 309) and that, in the normal case, through being pretensioned, secures the counter element (B), and with at least one intercepting component (21; 121, 133; 221; 321) that is also pivotably mounted on the base plate (3; 103; 203; 303) and that in the event of a crash supports the counter element (B), **characterized in that** in the locked state of the locking device (1; 101; 201; 301) the clamping eccentric (11; 111, 131; 211; 311) and the intercepting component (21;.121; 133; 221; 321) act directly on the counter element (B) as securing elements.

2. A locking device according to claim 1, **characterized in that** the base plate (3; 103; 203; 303) has a receptacle (5; 105; 205; 305) which in its bottom section cooperates positively with the counter element (B) when the locking device (1; 101; 201; 301) is in the locked state, and which in particular has a reinforcement (7; 107; 207) in said bottom section.

3. A locking device according to claim 1 or 2 **characterized in that**, in the locked state of the locking device (1; 101; 201; 301) the clamping eccentric (11; 111, 131; 211; 311) in the normal case bears directly against the counter element (B) by means of a clamping surface (15; 115; 215; 315) that is eccentrically curved relative to the first bearing pin (9; 109; 209; 309).

4. A locking device according to one of the preceding claims, **characterized in that** in order to unlock the locking device (1; 101; 201; 301), the intercepting component (21; 121; 133; 221; 321) has an unlocking pin (19; 119) or another element attached thereto, by means of which the intercepting component (21; 121; 133; 221; 321) can be pivoted away from the counter element (B), and which takes the clamping eccentric (11; 111, 131; 211; 311) along against the pretensioning of the latter.

5. A locking device according to one of the preceding claims, **characterized in that** the intercepting component (21; 121, 133; 221; 321) is pivotably mounted on the base plate (3; 103; 203; 303) by means of the first bearing pin (9; 109; 309) or by means of a second bearing pin (129; 229).

6. A locking device according to claim 5, **characterized in that** in the locked state of the locking device (1; 101; 201; 301) the intercepting component (21; 121, 133; 221; 321) directly supports the counter element (B) in the event of a crash by means of an intercepting surface (25; 125; 225; 325) arranged tangentially or concentrically with regard to the first or second bearing pin (9; 109, 129; 229; 329).

7. A locking device according to one of the preceding claims, **characterized in that** a second clamping eccentric (131) and/or a second intercepting component (133) are provided that act on the counter element (B) in a manner similar to the first clamping eccentric (11; 111; 211; 311) and to the first intercepting component (21; 121; 221; 321).

8. A locking device according to claim 7, **characterized in that** the first clamping eccentric (11; 111; 211; 311) and the first intercepting component (21; 121; 221; 321) on the one hand, and the second clamping eccentric (131) and the second intercepting component (133) on the other hand, are configured and arranged in mirror-inverted symmetry to one another with reference to a plane (E), the latter being defined by the direction of insertion of the counter element (B) into the receptacle (5; 105; 205; 305) and by the line normal to the base plate (3; 103; 203; 303).

9. A locking device according to one of the preceding claims, **characterized in that** the securing elements (11; 111, 131; 211; 311; 21; 121, 133; 221; 321) arranged on various bearing pins (9; 109, 129; 229; 329) are pretensioned and/or pivot in opposite directions to each other.

10. A locking device according to one of the preceding claims, **characterized in that** the securing elements (11; 111, 131; 211; 311; 21; 121, 133; 221; 321) arranged on the same bearing pin (9; 109, 129; 229; 329) are pretensioned and/or pivot in the same direction and/or are coupled by coupling means, in particular a slot-and-pin guide (318, 322) to bring about driving engagement.

11. A locking device according to one of the preceding claims, **characterized in that** the provided securing elements (11; 111, 131; 211; 311; 21; 121, 133; 221; 321) are acted on by first and second springs (13, 23; 113, 123; 213, 223) that are supported on the base plate (3; 103; 203; 303) and in particular are coiled around the assigned first and second bearing pins (9; 109, 129; 229; 329).

12. A locking device according to one of the preceding claims, **characterized in that** a blocking element (335) is provided that, in the unlocked state of the locking device (1; 101; 201; 301), indirectly or directly holds open at least one securing element (11; 111, 131; 211; 311; 21; 121, 133; 221; 321).

13. A locking device according to claim 12, **characterized in that** the blocking element (335) directly holds open exactly one securing element (11; 111, 131; 211; 311; 21; 121, 133; 221; 321) and indirectly holds open the other securing elements (11; 111, 131; 211; 311; 21; 121, 133; 221; 321).

14. A locking device according to claim 12 or 13, **characterized in that** the blocking element (335) cooperates positively with the securing element (11; 111, 131; 211; 311; 21; 121, 133; 221; 321) that is to be held open, and in particular has a shoulder (337) for cooperating with a corner of the securing element (11; 111, 131; 211; 311; 21; 121, 133; 221; 321).

15. A locking device according to one of claims 12 to 14, **characterized in that** in the unlocked state of the locking device (1; 101; 201; 301), the blocking element (335) crosses the receptacle (5; 105; 205; 305) transversely to the direction in which the counter element (B) is inserted into the receptacle (5; 105; 205; 305).

16. A locking device according to one of the preceding claims, **characterized in that** the locking device (1; 101; 201; 301) is mounted on one of two components of the vehicle, in particular the vehicle seat, and the counter element (B) is mounted on the other component, so that in the locked state both components are joined together by the cooperation of the locking device (1; 101; 201; 301) with the counter element (B), and in the unlocked state they are moveable relative to each other and/or can be moved away from each other.

## Revendications

1. Dispositif de verrouillage (1 ; 101 ; 201 ; 301) dans un véhicule, en particulier pour un siège de véhicule, destiné à coopérer avec un contre-élément (B), comportant une plaque de base (3 ; 103 ; 203 ; 303), au moins un excentrique de serrage (11 ; 111 ; 131 ; 211 ; 311), lequel est monté apte à pivoter sur la plaque de base (3 ; 103 ; 203 ; 303) au moyen d'un premier boulon de palier (9 ; 109 ; 209 ; 309), et assure le contre-élément (B) dans les conditions normales en raison d'une précontrainte, au moins une pièce d'arrêt (21 ; 121 ; 133 ; 221 ; 321), laquelle est également montée apte à pivoter sur la plaque de base (3 ; 103 ; 203 ; 303) et provoque, en cas d'accident, un maintien du contre-élément (B), **caractérisé par le fait que**, dans l'état verrouillé du dispositif de verrouillage (1 ; 101 ; 201 ; 301), l'excentrique de serrage (11 ; 111 ; 131 ; 211 ; 311) et la pièce d'arrêt (21 ; 121 ; 133 ; 221 ; 321) agissent directement sur le contre-élément (B) comme éléments de sécurité.

2. Dispositif de verrouillage selon la revendication 1, **caractérisé par le fait que** la plaque de base (3 ; 103 ; 203 ; 303) présente un logement (5 ; 105 ; 205 ; 305), lequel, dans l'état verrouillé du dispositif de verrouillage (1 ; 101 ; 201 ; 301), coopère par complémentarité de forme sur sa base avec le contre-élément (B), et présente là en particulier un renfort (7 ; 107 ; 207).

3. Dispositif de verrouillage selon l'une des revendications 1 ou 2, **caractérisé par le fait que**, dans l'état verrouillé du dispositif de verrouillage (1 ; 101 ; 201 ; 301), l'excentrique de serrage (11 ; 111 ; 131 ; 211 ; 311) attaque directement le contre-élément (B) dans les conditions normales au moyen d'une surface de serrage (15 ; 115 ; 215 ; 315) cintrée excentriquement par rapport au premier boulon de palier (9 ; 109 ; 209 ; 309).

4. Dispositif de verrouillage selon l'une quelconque des revendications précédentes, **caractérisé par le fait que**, pour le déverrouillage du dispositif de verrouillage (1 ; 101 ; 201 ; 301), la pièce d'arrêt (21 ; 121 ; 133 ; 221 ; 321) présente une broche de déverrouillage (19 ; 119) ou un autre élément qui y est rapporté, au moyen duquel la pièce d'arrêt (21 ; 121 ; 133 ; 221 ; 321) est détachable par pivotement du contre-élément (B) et qui entraîne l'excentrique de serrage (11 ; 111 ; 131 ; 211 ; 311) à l'encontre de sa précontrainte.

5. Dispositif de verrouillage selon l'une quelconque des revendications précédentes, **caractérisé par le fait que** la pièce d'arrêt (21 ; 121 ; 133 ; 221 ; 321) est montée apte à pivoter sur la plaque de base (3 ; 103 ; 203 ; 303) au moyen du premier boulon de palier (9 ; 109 ; 309) ou d'un second boulon de palier (129 ; 229).

6. Dispositif de verrouillage selon la revendication 5, **caractérisé par le fait que**, dans l'état verrouillé du dispositif de verrouillage (1 ; 101 ; 201 ; 301), la pièce d'arrêt (21 ; 121 ; 133 ; 221 ; 321) maintient directement le contre-élément (B) en cas d'accident au moyen d'une surface d'arrêt (25 ; 125 ; 225 ; 325) disposée tangentiellement ou concentriquement au premier ou second boulon de palier (9 ; 109 ; 129 ; 229 ; 329).

7. Dispositif de verrouillage selon l'une quelconque des revendications précédentes, **caractérisé par le fait que** sont prévus un second excentrique de serrage (131) et/ou une seconde pièce d'arrêt (133), lesquels agissent sur le contre-élément (B) de manière correspondante au premier excentrique de serrage (11 ; 111 ; 211 ; 311) et à la première pièce d'arrêt (21 ; 121 ; 221 ; 321).

8. Dispositif de verrouillage selon la revendication 7, **caractérisé par le fait que** le premier excentrique de serrage (11 ; 111 ; 211 ; 311) et la première pièce d'arrêt (21 ; 121 ; 221 ; 321) d'une part, et le second excentrique de serrage (131) et la seconde pièce d'arrêt (133) d'autre part, sont formés et disposés l'un par rapport à l'autre à la manière de l'image d'un objet dans un miroir par rapport à un plan (E), lequel est défini par la direction d'introduction du contre-élément (B) dans le logement (5 ; 105 ; 205 ; 305) et la perpendiculaire à la plaque de base (3 ; 103 ; 203 ; 303).

9. Dispositif de verrouillage selon l'une quelconque des revendications précédentes, **caractérisé par le fait que** les éléments de sécurité (11 ; 111 ; 131 ; 211 ; 311 ; 21 ; 121 ; 133 ; 221 ; 321) disposés sur différents boulons de palier (9 ; 109 ; 129 ; 229 ; 329) sont précontraints et/ou pivotent l'un par rapport à l'autres en sens inverse.

10. Dispositif de verrouillage selon l'une quelconque des revendications précédentes, **caractérisé par le fait que** les éléments de sécurité (11 ; 111 ; 131 ; 211 ; 311 ; 21 ; 121 ; 133 ; 221 ; 321) disposés sur le même boulon de palier (9 ; 109 ; 129 ; 229 ; 329) sont précontraints et/ou pivotent dans le même sens, et/ou sont couplés en entraînement au moyen d'un accouplement, en particulier une glissière à fente et tenon (318 ; 322).

11. Dispositif de verrouillage selon l'une quelconque des revendications précédentes, **caractérisé par le fait que** les éléments de sécurité prévus (11 ; 111 ; 131 ; 211 ; 311 ; 21 ; 121 ; 133 ; 221 ; 321) sont attaqués par des premier et second ressorts (13, 23 ; 113, 123 ; 213, 223), lesquels sont supportés sur la plaque de base (3 ; 103 ; 203 ; 303) et sont enroulés en particulier autour des premier et second boulons de palier associés (9 ; 109 ; 129 ; 229 ; 329).

12. Dispositif de verrouillage selon l'une quelconque des revendications précédentes, **caractérisé par le fait qu'**un élément d'arrêt (335) est prévu, lequel, dans l'état déverrouillé du dispositif de verrouillage (1 ; 101 ; 201 ; 301), maintient ouvert indirectement ou directement au moins un élément de sécurité (11 ; 111 ; 131 ; 211 ; 311 ; 21 ; 121 ; 133 ; 221 ; 321).

13. Dispositif de verrouillage selon la revendication 12, **caractérisé par le fait que** l'élément d'arrêt (335) maintient ouvert directement de manière précise un élément de sécurité (11 ; 111 ; 131 ; 211 ; 311 ; 21 ; 121 ; 133 ; 221 ; 321) et maintient ouvert indirectement les autres éléments de sécurité (11 ; 111 ; 131 ; 211 ; 311 ; 21 ; 121 ; 133 ; 221 ; 321).

14. Dispositif de verrouillage selon l'une des revendications 12 ou 13, **caractérisé par le fait que** l'élément de sécurité (335) coopère par complémentarité de forme avec l'élément de sécurité (11 ; 111 ; 131 ; 211 ; 311 ; 21 ; 121 ; 133 ; 221 ; 321) à maintenir ouvert, en particulier présente un talon (337) pour la coopération avec un angle de l'élément de sécurité (11 ; 111 ; 131 ; 211 ; 311 ; 21 ; 121 ; 133 ; 221 ; 321).

15. Dispositif de verrouillage selon l'une des revendications 12 à 14, **caractérisé par le fait que**, dans l'état déverrouillé du dispositif de verrouillage (1 ; 101 ; 201 ; 301), l'élément d'arrêt (335) croise le logement (5 ; 105 ; 205 ; 305) transversalement à la direction d'introduction du contre-élément (B) dans le logement (5 ; 105 ; 205 ; 305).

16. Dispositif de verrouillage selon l'une quelconque des revendications précédentes, **caractérisé par le fait que** le dispositif de verrouillage (1 ; 101 ; 201 ; 301) est rapporté sur l'un de deux composants du véhicule, en particulier le siège du véhicule, et le contre-élément (B), sur l'autre composant, les deux composants, dans l'état verrouillé, étant liés par la coopération du dispositif de verrouillage (1 ; 101 ; 201 ; 301) avec le contre-élément (B) et étant, dans l'état déverrouillé, déplaçables et/ou éloignables l'un par rapport à l'autre.
